Europäisches Patentamt

European Patent Office

Office européen des brevets

(11) Publication number: **0 165 078**
A2

# (12) EUROPEAN PATENT APPLICATION

(21) Application number: **85304336.2**

(22) Date of filing: **17.06.85**

(51) Int. Cl.⁴: **B 60 T 11/10**

(30) Priority: **15.06.84 ZA 844545**

(43) Date of publication of application:
**18.12.85 Bulletin 85/51**

(84) Designated Contracting States:
**AT BE CH DE FR GB IT LI LU NL SE**

(71) Applicant: **McCaskie, Paul William**
**94 Culross Road**
**Bryanston Johannesburg Transvaal(ZA)**

(72) Inventor: **McCaskie, Paul William**
**94 Culross Road**
**Bryanston Johannesburg Transvaal(ZA)**

(74) Representative: **Leale, Robin George et al,**
**FRANK B. DEHN & CO. Imperial House 15-19 Kingsway**
**London WC2B 6UZ(GB)**

(54) Brake locking device.

(57) A brake locking device of the type which includes a non-return valve for installation in the hydraulic brake line of a motor vehicle. When operative, the device permits brake fluid to flow from the brake master cylinder to the brake cylinder(s), but prevents return flow from the brake cylinder(s). When inoperative, the device permits fluid flow in both directions. An actuating cam (62) is provided for operating the non-return valve. This valve includes a plunger and sliding piston at right angles to the axis of the camshaft (60) carrying the cam, and biasing means for urging a closure on the piston into sealing engagement with a valve seat in a passage accommodating the plunger when the device is set in the operative position. In this position, the closure can be unseated against the bias to permit unidirectional flow to the brake cylinder(s).

Croydon Printing Company Ltd.

- 1 -

"BRAKE LOCKING DEVICE"

THIS invention relates to a brake locking device.

The type of device here under consideration is one which is installed in a brake fluid supply line between the master cylinder and slave or brake cylinders of a motor vehicle. Such devices include a non-return valve which, at least when operational, permits brake fluid to flow from the master to the brake cylinders, but which prevents flow in the opposite direction. Thus, the brakes of the vehicle can be applied, but cannot be released until the non-return valve is actuated to resume its original condition.

Many devices of this general type are described in the prior art. However, none of the previously known devices are entirely satisfactory in use. The applicant believes that there are many contributory reasons for this, one of the major ones being poor craftsmanship and quality resulting in unacceptable leakages and poor performance in use.

An object of the present invention is to provide a brake locking device which, when operational, only permits unidirectional flow of brake fluid to the brake cylinders and which incorporates a novel form of non-return valve.

The invention provides a brake locking device comprising a housing having a first passage therein, at least one second passage therein intersecting the first passage at a right angle, upstream and downstream ports entering the second passage to either side of a shoulder in that passage and being respectively communicable with a brake master cylinder and a brake cylinder, a camshaft rotatable in the first passage and carrying a cam opposite the second passage, a plunger located in the second passage and movable axially in sealing relationship with the second passage by the cam, a plunger piston mating with the plunger in axial sliding relationship, a closure formation on the piston, and biasing means urging the piston apart from the plunger, the arrangement being such that, on rotation of the camshaft to a first, operative position, the plunger is moved by the cam and the closure is urged by the biasing means to seat on the shoulder to act as a non-return valve permitting unidirectional flow through the second passage from the upstream to the downstream port but preventing return flow, and, on rotation of the camshaft to a second, inoperative position, the plunger and piston assembly is moved in the second passage by hydraulic pressure to a position in which the closure is away from the shoulder and permits bidirectional flow between the upstream and downstream ports.

In one version of the invention, the piston is arranged as an axial slide fit in a blind bore in the plunger. Preferably, the piston carries an O-ring, the O-ring abutting a collar on the piston and constituting the closure formation, the biasing means being in the form of a compression spring acting between the plunger and the collar. Stop means may be provided to ensure that the spring cannot bias the O-ring into sealing engagement with the shoulder when the camshaft is rotated to its second, inoperative position. The stop means can take the form of a lateral projection on the piston which abuts an abutment on the plunger when the camshaft is rotated to its second, inoperative position. In a preferred arrangement, the piston carries a transverse, laterally projecting pin and the plunger is formed with a lateral bore intersecting the blind bore which receives the piston, the pin abutting the wall of the lateral bore when the camshaft is rotated to its second, inoperative position.

Alarm means may be provided for indicating to a driver of a vehicle fitted with the device that the camshaft is in the first, operative position at least when an attempt is made to start the vehicle's engine. There may be a port communicating with the first passage through which are inserted spaced terminals of an electrical circuit including the ignition switch of the vehicle and an alarm device, and a formation on the camshaft which bridges the terminals to complete the circuit and energise the alarm device when the ignition switch is switched on.

An embodiment of the invention will now be described by way of example and with reference to the accompanying drawings, in which:-

Figure 1    shows a sectional view of a device according to the invention, the device being in an operative condition;

Figure 2    shows a sectional view of the device in an inoperative condition;

Figure 3    shows an elevation of the device in the direction of the arrow A in Figure 1;

Figure 4    shows a detail of the camshaft and lock;

Figure 5    shows a section at the line 5-5 in Figure 1;

Figure 6    shows a section at the line 6-6 in Figure 2; and

Figure 7    shows a detail of the plunger and piston assembly.

The device illustrated in the Figures includes a body 10 made up of two parts 12 and 14 which are held together by cap screws 16 located in deep bores 18 in the body part 12. Once the body parts have been assembled correctly, the bores 18 are plugged up behind the cap screws to prevent their removal and unauthorised tampering with the interior components.

Two parallel passages 28 extend in the body part 12 from near its upper end right to its lower end, where they intersect, at 90°, a passage 30 formed in the body part 14. Each of the passages 28 accommodates a plunger and piston assembly, the nature of which is illustrated more clearly in Figure 7.

Each plunger and piston assembly comprises two parts, a plunger 31 and a plunger piston 32. The plunger carries two 0-rings 34 encircling its mid-section and is formed with a blind bore 36 receiving the plunger piston 32 in an axial slide fit. A compression spring 38 acts between the end of the plunger and a collar 40 on the plunger piston. The plunger piston has an axial bore 42 which intersects a transverse bore 44 passing right through the piston and there is, in addition, a further transverse bore 46 passing right through the piston. An 0-ring 48 encircles the piston next to the collar. There is also a transverse bore 50 passing right through the plunger 31 from side to side and intersecting the blind bore 36. The 0-rings 34 are sized to make a good sealing fit in the passage 28.

Each passage has the shape shown, with a major portion 52 of its length having a greater diameter than a minor portion 54 and with a shoulder 53 between the portions 52 and 54. Formed in the body part 12 from each side thereof are two threaded ports 56 and 58 which vent into the passages 28 a short distance apart from one another. The upstream port 56 receives a threaded nipple connected to a conduit leading from the master cylinder of a vehicle's hydraulic brake system, and the downstream port 58 a threaded nipple connected to a conduit leading to the brake cylinders of, say, the front wheel pair. In vehicles where there is a dual brake system, and it is desired to use to lock all four wheels, the conduits will be connected up to both sets of ports 56 and 58. In cases where there is a single brake system for all four wheels, or where there is a dual brake system but it is desired only to lock one wheel pair, then only one set of ports 56, 58 will be used, and the other two ports can then be plugged with suitable screw-in plugs. In the latter types of case, there will be no plunger assembly in the relevant passage 28.

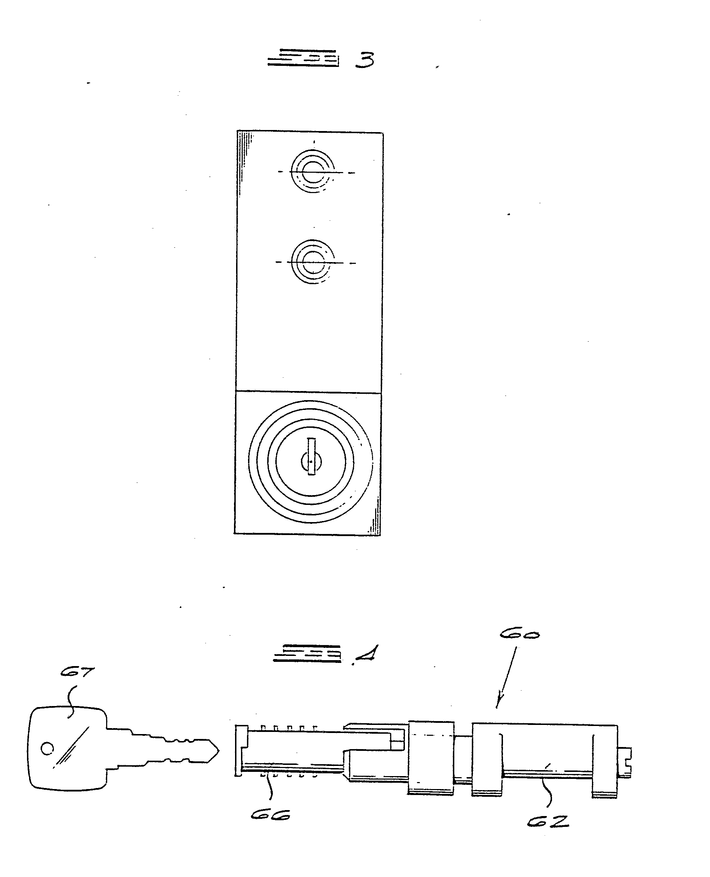

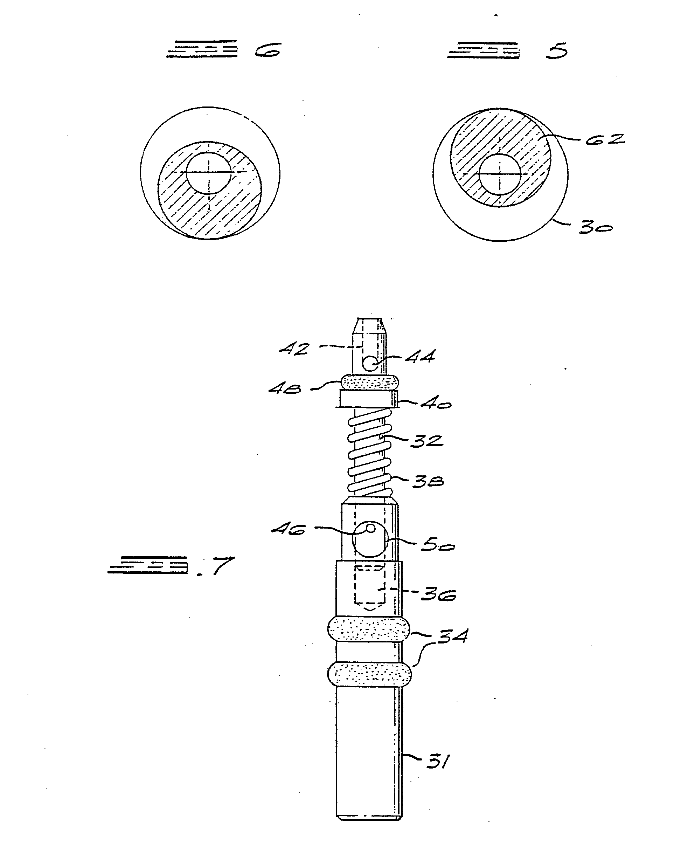

Accommodated rotatably in the passage 30 in the body part 14 is a camshaft 60 fitted with a cam lobe 62 located opposite the passages 28. Also accommodated within the passage 30, and protruding slightly from its open end is a lock 66 which is connected to the rear end of the camshaft 60 by a screw 59. When the correct key 67 is inserted into the lock and rotated, the camshaft and hence the cam lobes are rotated. Figure 4 illustrates the nature of the camshaft and lock in greater detail, with Figures 5 and 6 illustrating the shape of the cam lobe.

The open end of the passage 30 is plugged securely by means of a plug 68.

The device described above operates in the following way, assuming that only a single plunger and piston assembly is used i.e. one of the passages 28 is empty :

When it is desired to render the device operative i.e. it is desired to prevent operation of the vehicle by locking its wheels, the key 67 is inserted into the lock 66 and actuated to cause rotation of the camshaft to the position seen in Figure 5. The cam 62 acts on the lower end of the plunger 31 and urges it upwardly in the passage 28. Note that the O-rings 34 make sealing contact with the wall of the passage 28. This movement, in combination with the biasing action of the compression spring 38, serves to seat the O-ring 48 firmly upon the shoulder 53. There is a space 64 beneath the lower end of the plunger piston 32 in the blind bore 36.

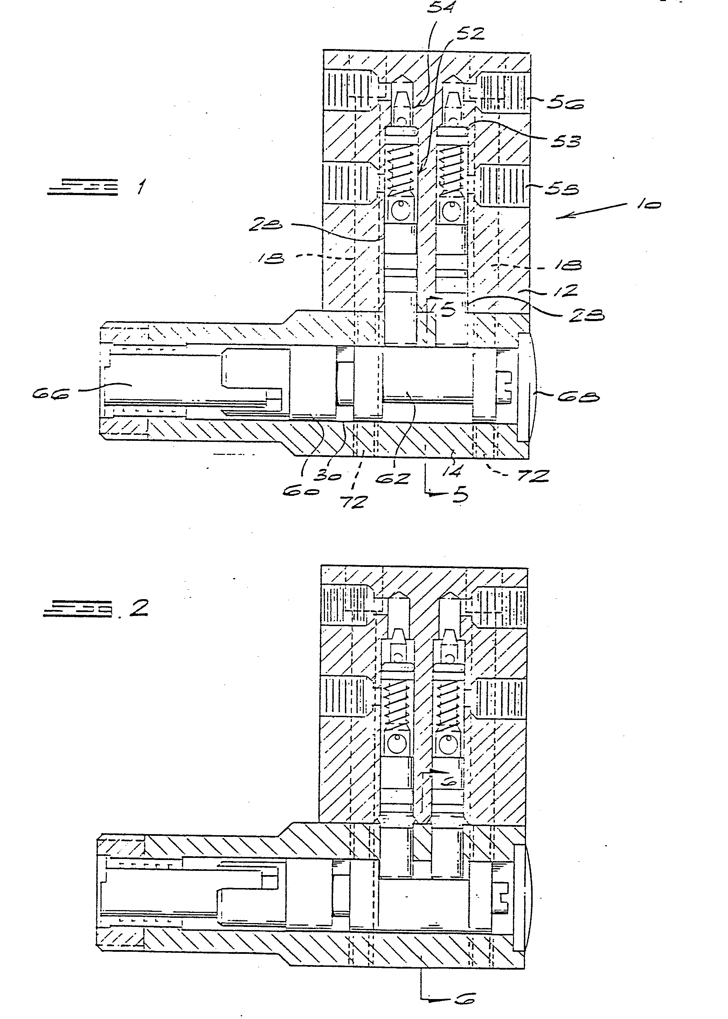

With the device in this condition, the driver of the vehicle pumps his brake pedal, with the result that pressurised brake fluid from the master cylinder enters the portion 54 of the passage 28 via the port 56. The pressure fluid fills the space existing in the portion 54 about the upper end of the plunger piston 32 and applies a downward force to unseat the O-ring 48 from the shoulder 53 against the bias of the spring 38. The fluid is then able to flow through the passage 28 to the port 58 from where it flows to the brake cylinder(s) to actuate the brakes. Pressure fluid downstream of the device is unable to return through the device because, at pressure equalisation, the spring 38 urges the O-ring 48 back into sealing engagement with the shoulder 53. In other words, the O-ring

serves as the closure in a non-return valve when the device is in this condition. The driver can now withdraw the key 67 leaving the device in the Figure 1, operative condition, in which the vehicle cannot be driven. Note that it is not essential for the driver to go through the brake pedal pumping procedure. He can, if he wishes, merely withdraw the key once the device has been set in the Figure 1 condition. Then, if a would-be thief attempts to drive the vehicle away, he will get no further than the place at which he first applies pressure to the brake pedal, because the situation described above will take place.

When the driver returns to the vehicle and wishes to drive it, he inserts the key 67 into the lock and actuates it to move the camshaft to the position seen in Figure 6. Before this happens, the available space in the passage 28 is filled with pressurised brake fluid. As soon as the cam 62 assumes the Figure 6 position, the hydraulic pressure urges the plunger downwardly to maintain its contact with the cam. The relative dimensions of the passage and of the plunger and piston are such that, when this happens, the O-ring 48 leaves the shoulder 53. A transverse pin is located in the bore 46 in the piston, and this pin abuts the upper edge of the cross-bore 50 in the plunger, preventing full extension of the spring to a length which would re-seat the O-ring 48 on the shoulder 53.

There is thus a clear route through the passage 28 between the ports 56 and 58. Brake fluid is therefore capable of bidirectional flow between the master and brake cylinders and the vehicle's brakes will operate in the normal way.

A number of modifications to the device described above are also contemplated. In a more sophisticated device, it would be possible to have a new generation locking system in which the camshaft lock is actuated by a magnetically encoded key carried by the driver and personal to him alone.

Also, an alarm facility can be provided in a relatively simple manner. It will be seen in Figures 1 and 2 that vertical holes 72 extend from the underside of the part 14 to the passage 30 accommodating the camshaft.

In one alarm system contemplated by the invention, electrical leads in an electrical alarm circuit are arranged to extend into the passage 30 through one or both holes 72. The camshaft will be shaped in its regions opposite the holes 72 so as to contact both leads when the device is in the Figure 1 condition, so completing the electrical circuit. The circuit includes the ignition switch of the vehicle as well as an audible or visible alarm device in the cab of the vehicle.

If the driver attempts to start the engine of his vehicle without first returning the device to the Figure 2, inoperative condition, the alarm circuit is completed by the bridging action of the camshaft and an audible or visible signal is emitted in the cab to warn him not to drive until he has used the key 67 to return the device to the Figure 2 condition.

A further switch device could conveniently be located in the space occupied in Figure 1 and 2 by an end plug 68 closing off the passage 30 with suitable formations at the end of the camshaft to actuate the switch on rotation of the camshaft. This further switch device could form part of an electrical alarm circuit including an externally audible alarm device to indicate to passers-by that an unauthorised person is making an attempt to drive away the vehicle without first having returned the brake locking device to the Figure 2 condition.

Of course, for convenience of operation, the brake locking device described above will normally be mounted behind the dashboard of the vehicle with the keyhole of the lock 66 in an easily accessible position. Other places for the device are, of course, also possibilities eg under the bonnet.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon.

### CLAIMS

1.

A brake locking device characterized by a housing having a first passage therein, at least one second passage therein intersecting the first passage at a right angle, upstream and downstream ports entering the second passage to either side of a shoulder in that passage and being respectively communicable with a brake master cylinder and a brake cylinder, a camshaft rotatable in the first passage and carrying a cam opposite the second passage, a plunger located in the second passage and movable axially in sealing relationship with the second passage by the cam, a plunger piston mating with the plunger in axial sliding relationship, a closure formation on the piston, and biasing means urging the piston apart from the plunger, the arrangement being such that, on rotation of the camshaft to a first, operative position, the plunger is moved by the cam and the closure is urged by the biasing means to seat on the shoulder to act as a non-return valve permitting unidirectional flow through the second passage from the upstream to the downstream port but preventing return flow, and, on rotation of the camshaft to a second, inoperative position, the plunger and piston assembly is moved in the second passage by hydraulic pressure to a position in which the closure is away from the shoulder and permits bidirectional flow between the upstream and downstream ports.

2.

The brake locking device of claim 1 characterized in that the piston is arranged as an axial slide fit in a blind bore in the plunger.

3.

The brake locking device of claim 2 characterized in that the piston carries an O-ring, the O-ring abutting a collar on the piston and constituting the closure formation, the biasing means being in the form of a compression spring acting between the plunger and the collar.

4.

The brake locking device of claim 3 characterized in that stop means are provided to ensure that the spring cannot bias the O-ring into sealing engagement with the shoulder when the camshaft is rotated to its second, inoperative position.

5.

The brake locking device of claim 4 characterized in that the stop takes the form of a lateral projection on the piston which abuts an abutment on the plunger when the camshaft is rotated to its second, inoperative position.

6.

The brake locking device of claim 5, characterized in that the piston carries a transverse, laterally projecting pin and in which the plunger is formed with a lateral bore intersecting the blind bore which receives the piston, the pin abutting the wall of the lateral bore when the camshaft is rotated to its second, inoperative position.

7.

The brake locking device of any one of the preceding claims characterized in that the device includes two second passages each accommodating a plunger and each having upstream and downstream ports.

8.

The brake locking device of claim 7 characterized in that the two plungers are movable in unison by a single cam on the camshaft.

9.

The brake locking device of any one of the preceding claims characterized by including alarm means for indicating to a driver of a vehicle fitted with the device that the camshaft is in the first, operative position at least when an attempt is made to start the vehicle's engine.

10.

The brake locking device of claim 9 characterized by a port communicating with the first passage through which are inserted spaced terminals of an electrical circuit including the ignition switch of the vehicle and an alarm device, and a formation on the camshaft which bridges the terminals to complete the circuit and energise the alarm device when the ignition switch is switched on.

11.

The brake locking device of any one of the preceding claims characterized by a key operated mechanical lock for locking the camshaft selectively in its operative or inoperative position.

0165078

Fig. 1

Fig. 2

0165078

**Fig 3**

**Fig 4**

67

60

66

62

0165078

Fig 6

Fig 5

62

30

Fig.7

42

44

48

40

32

38

46

50

36

34

31